# FASCICULE DE BREVET EUROPEEN

(11) **EP 3 871 138 B1**
(45) Date de publication et mention de la délivrance du brevet: **22.04.2026**
(21) Numéro de dépôt: 19808689.4
(22) Date de dépôt: 11.10.2019
(51) Int. Cl.: G06V 10/143, G06V 10/147, G06V 20/56, B60Q 1/00, B60Q 1/24

(54) **SYSTÈME ET PROCÉDÉ POUR L'ÉCLAIRAGE D'UNE RÉGION LATÉRALE D'UN VÉHICULE**
SYSTEM UND VERFAHREN ZUR BELEUCHTUNG EINES SEITENBEREICHS EINES FAHRZEUGS
SYSTEM AND METHOD FOR LIGHTING A LATERAL REGION OF A VEHICLE

(30) Priorité: 24.10.2018 FR 1859837
(43) Date de publication de la demande: 01.09.2021
(73) Titulaire: Valeo Vision, 93012 Bobigny Cedex (FR)
(72) Inventeur: BEEV, Kostadin, 93012 BOBIGNY Cedex (FR); ALBOU, Pierre, 93012 BOBIGNY Cedex (FR); JIN, Hui, 75014 PARIS (FR); PLANCHE, Gregory, 93012 BOBIGNY Cedex (FR); DUVAL, Christophe, 93012 BOBIGNY Cedex (FR); DUBOSC, Christophe, 93012 BOBIGNY (FR)
(74) Mandataire: Valeo Visibility
(86) Numéro de dépôt international: PCT/EP2019/077583
(87) Numéro de publication internationale: WO 2020/083665

(56) Documents cités:
- US-A1- 2008 122 597
- US-B1- 9 758 088

## Description

L'invention concerne un système d'éclairage d'une région latérale d'un véhicule et un système d'assistance à la conduite d'un véhicule automobile. L'invention concerne également un véhicule automobile en tant que tel comprenant un tel système d'éclairage ou un tel système d'assistance. L'invention concerne également un procédé pour éclairer la région latérale d'un véhicule et un procédé d'assistance à la conduite d'un véhicule automobile, respectivement mis en œuvre par le système d'éclairage et le système d'assistance.

### État de la technique

Avec le développement du véhicule automobile autonome, il devient nécessaire d'améliorer l'assistance à la conduite, dans toutes les conditions d'éclairage, notamment pour gérer différentes fonctions particulières de conduite parmi lesquelles :
- le maintien sur une voie, aussi dénommé par l'appellation anglo-saxonne « lane keeping », pour permettre à un véhicule de suivre sa voie sur une route, notamment en détectant et signalant au conducteur toute déviation de trajectoire ;
- le centrage sur une voie, aussi dénommé par l'appellation anglo-saxonne « lane centering », qui vient en complément de la fonction précédente, et permet plus précisément de maintenir le véhicule de manière autonome au centre de sa voie,
- le changement de voie, aussi dénommé par l'appellation anglo-saxonne « lane changing », pour permettre à un véhicule de changer de voie, par exemple en vue d'un dépassement,
- le freinage d'urgence, aussi dénommé par l'appellation anglo-saxonne « automating emergency breaking », ou plus simplement par le sigle AEB,
- la manœuvre d'évitement d'urgence, aussi dénommé par l'appellation anglo-saxonne « automating emergency steering », ou plus simplement par le sigle AES, qui permet d'éviter un obstacle présent sur sa voie,
- l'assistance au parking, et le parking autonome.

Dans ces différentes fonctions, le système d'assistance a besoin de recevoir des informations en entrée, parmi lesquelles notamment la détection des marquages au sol, comme les lignes délimitant les voies, et/ou la présence des éventuels obstacles sur la route. Cette détection doit pouvoir être réalisée dans toutes les conditions, et notamment la nuit.

En remarque, l'éclairage existant sur un véhicule permet d'éclairer la route devant le véhicule à partir d'une distance de deux mètres sur sa propre voie et de cinq mètres sur les voies adjacentes.

Cependant, l'éclairage de la partie latérale du véhicule est plus délicate car l'éclairage doit couvrir l'intégralité d'une surface rectangulaire adjacente au véhicule, s'étendant depuis quelques centimètres du véhicule à plusieurs mètres et s'étendant sur une longueur d'une dizaine de mètres. L'étendue angulaire de cette zone à éclairer rend très difficile l'éclairage de toute cette surface de manière homogène.

Ces contraintes font qu'il est aujourd'hui délicat, voire impossible, de pouvoir détecter certains marquages au sol ou obstacles à proximité d'un véhicule, notamment dans les régions latérales, ce qui ne permet pas d'offrir un système d'assistance remplissant les fonctions susmentionnées nécessaires à un véhicule autonome.

Un exemple de document antérieur est US 2008/122597 A1 (ENGLANDER BENJAMIN [US]) 29 mai 2008 (2008-05-29)

### Objet de l'invention

L'invention est définie par les revendications annexées. Le but de l'invention est de fournir un système et un procédé d'éclairage d'une région latérale d'un véhicule remédiant aux inconvénients ci-dessus et améliorant les systèmes et procédés d'assistance à la conduite d'un véhicule automobile, lui permettant notamment de remplir les fonctions d'assistance explicitées ci-dessus, pour être apte à l'assistance d'un véhicule autonome.

En complément, le but de l'invention est de fournir une solution d'éclairage et d'assistance à la conduite d'un véhicule automobile simple, sans surcoût trop important et fiable.

A cet effet, l'invention porte sur un système d'éclairage d'une région latérale d'un véhicule, comprenant un premier module lumineux arrière apte à émettre un premier faisceau lumineux et un deuxième module lumineux avant apte à émettre un deuxième faisceau lumineux. Le premier et le deuxième module lumineux sont agencés de sorte que leurs faisceaux lumineux respectifs sont orientés l'un vers l'autre.

Dans un mode de réalisation, le premier faisceau lumineux est orienté selon un premier axe principal d'émission, et le deuxième faisceau lumineux est orienté selon un deuxième axe principal d'émission. Les projections sur un plan horizontal du premier axe principal d'émission et du deuxième axe principal d'émission sont sécants.

Dans un mode de réalisation, les deux modules lumineux sont disposés de manière à ce que leurs faisceaux lumineux sont aptes à se croiser en une zone de recouvrement, délimitée par un point de croisement localisé à une distance du véhicule comprise entre 50 cm et 5 m.

Dans un mode de réalisation, le premier module lumineux et le deuxième module lumineux sont disposés l'un de l'autre à une distance supérieure à 15 cm.

Dans un mode de réalisation, le premier module lumineux et/ou le deuxième module lumineux comprend au moins une source de lumière infrarouge, préférentiellement proche infrarouge.

L'invention porte aussi sur un système d'assistance à la conduite d'un véhicule comprenant un système d'éclairage selon l'invention et au moins un dispositif de prise d'image comme un appareil photo ou une caméra.

L'invention porte également sur un véhicule, notamment un véhicule automobile, comprenant un système d'éclairage selon l'invention ou un système d'assistance à la conduite d'un véhicule selon l'invention.

Dans un mode de réalisation, le premier module lumineux est disposé sur une partie arrière du véhicule et le deuxième module lumineux est disposé sur une partie avant du véhicule, et dans lequel le premier axe principal d'émission est orienté vers la partie avant du véhicule et le deuxième axe principal d'émission est orienté vers la partie arrière du véhicule.

Dans un mode de réalisation, le premier module lumineux et/ou le deuxième module lumineux est disposé sur une partie basse du véhicule, préférentiellement à une distance du sol comprise entre 20 cm et 50 cm.

Dans un mode de réalisation, le véhicule comprend en outre un dispositif de prise d'image agencé de manière à prendre une image d'une région latérale du véhicule.

L'invention porte aussi sur un procédé d'éclairage d'une région latérale d'un véhicule. Ledit procédé d'éclairage comprend une étape d'émission d'un premier faisceau lumineux par un premier module lumineux arrière et une étape d'émission d'un deuxième faisceau lumineux par un deuxième module lumineux avant. Les deux faisceaux lumineux sont orientés l'un vers l'autre.

L'invention porte enfin sur un procédé d'assistance à la conduite d'un véhicule, comprenant la mise en œuvre d'un procédé d'éclairage selon l'invention, et une étape de capture d'une image d'une région latérale d'un véhicule éclairée par au moins l'un des deux faisceaux lumineux.

### Description sommaire des dessins

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement en vue de dessus un véhicule équipé d'un système d'éclairage selon un mode de réalisation de l'invention.
La figure 2 représente le véhicule équipé du système d'éclairage selon le mode de réalisation de l'invention dont seul l'éclairage du premier module lumineux est allumé.
La figure 3 représente le véhicule équipé du système d'éclairage selon le mode de réalisation de l'invention dont seul l'éclairage du deuxième module lumineux est allumé.
La figure 4 représente les axes principaux d'émissions des deux modules lumineux du système d'éclairage selon le mode de réalisation de l'invention.
La figure 5 représente une vue de côté d'un véhicule équipé d'un système d'éclairage selon un mode de réalisation de l'invention.
La figure 6 représente une vue du dessus d'un véhicule et de la région latérale du véhicule à éclairer selon un mode de réalisation de l'invention.

### Description détaillée

Pour faciliter la description, nous dénommerons par convention la direction longitudinale la direction s'étendant de l'arrière vers l'avant d'un véhicule, c'est-à-dire la direction selon laquelle un véhicule se déplace en marche avant. Cette direction est illustrée par une flèche A sur les figures. Nous dénommerons direction transversale la direction perpendiculaire à la direction longitudinale, dans un plan horizontal, défini par le plan sur lequel le véhicule repose. Enfin, nous dénommerons direction verticale la direction perpendiculaire aux deux directions précédentes, orientée vers le haut.

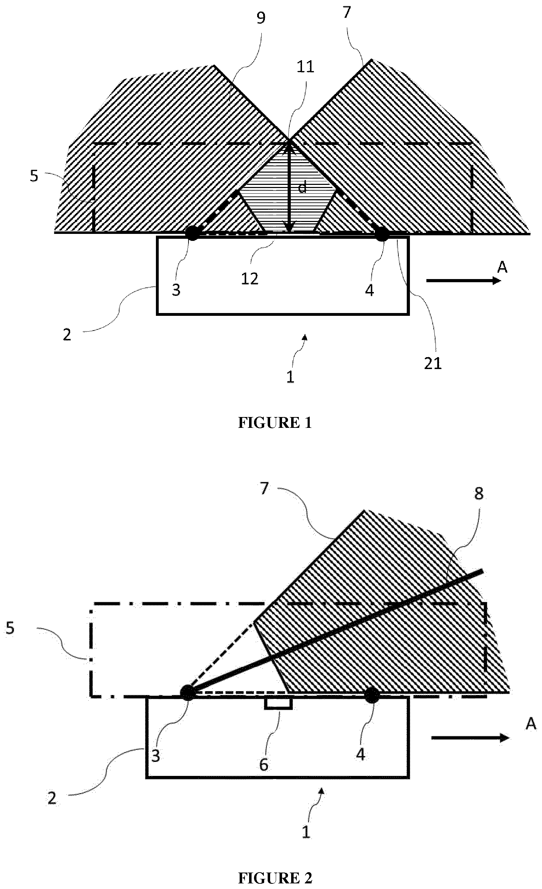

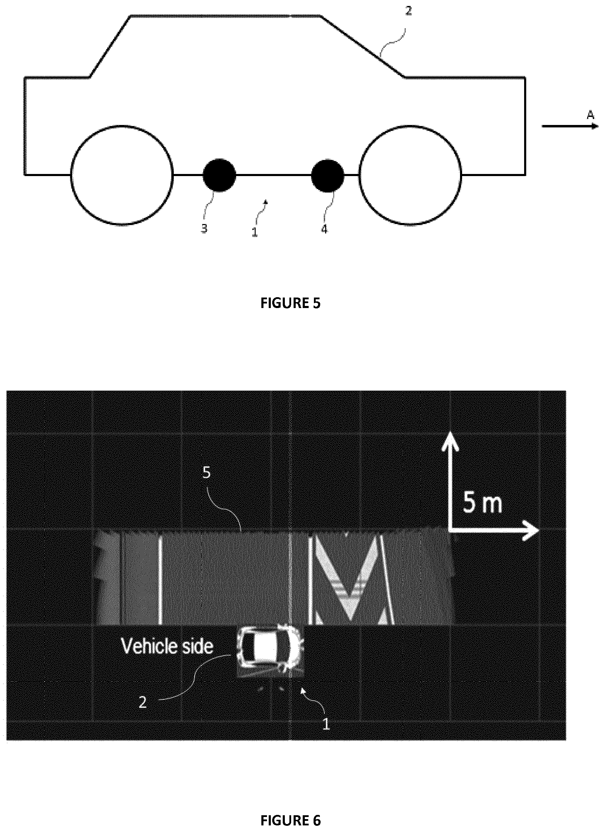

Un exemple de véhicule 2 équipé d'un système d'éclairage d'une région latérale selon un mode de réalisation est décrit ci-après en référence aux figures 1 à 6. Le véhicule 2 est préférentiellement un véhicule automobile comme une voiture ou un camion. Il comprend un côté latéral 21. Il est équipé d'un système d'éclairage 1 selon un mode de réalisation de l'invention qui permet d'éclairer une région latérale 5 du véhicule, adjacente ou à proximité de ce côté latéral 21. Comme illustré sur la figure 6, cette région latérale 5 du véhicule 2 peut être définie par une surface rectangulaire adjacente au véhicule ou située à une distance inférieure ou égale à 10 cm, préférentiellement inférieure ou égale à 5 cm. La région latérale 5 est préférentiellement une surface du sol, c'est-à-dire une portion de la surface horizontale sur laquelle repose le véhicule 2. Comme illustré sur la figure 6, la région latérale 5 à illuminer peut s'étendre sur une longueur d'environ 20 m et sur une largeur d'environ 5 m.

Le système d'éclairage 1 comprend un premier module lumineux 3 arrière et un deuxième module lumineux 4 avant. La lumière émise par les modules lumineux 3, 4 peut être une lumière visible ou une lumière infrarouge. La lumière infrarouge est invisible à l'œil humain, et permet donc aux modules lumineux 3, 4 d'émettre un faisceau lumineux qui soit conforme aux réglementations en vigueur. Préférentiellement, la lumière émise par les modules lumineux 3, 4 peut être une lumière dont le rayonnement couvre les longueurs d'onde du proche infrarouge. En effet, l'infrarouge proche est intéressant à utiliser car en plus de permettre la formation d'un faisceau invisible à l'œil humain et donc conforme aux réglementations en vigueur, les capteurs utilisés de façon usuelle pour détecter la lumière visible sont également sensibles à la lumière infrarouge proche, alors qu'ils ne sont pas sensibles au reste du rayonnement infrarouge. L'émission de lumière infrarouge proche permet ainsi de ne pas utiliser un capteur spécifiquement conçu pour capter la lumière infrarouge. Par proche infrarouge, on entend un rayonnement dont la longueur d'onde est comprise entre 0,7 µm et 2,5 µm ou entre 0,7 µm et 1,1 µm.

Les modules lumineux 3, 4 sont disposés de manière à éclairer la région latérale 5 du véhicule 2. Les modules lumineux 3, 4 sont disposés de manière à éclairer le sol.

Comme illustré sur la figure 2, le premier module lumineux 3 émet un premier faisceau lumineux 7 selon un premier axe 8 principal d'émission. Ce premier faisceau lumineux 7 est sensiblement compris dans un volume conique d'axe le premier axe 8 principal d'émission. La surface du sol éclairée par le premier module lumineux 3 est représentée par la surface hachurée. En remarque, le premier faisceau lumineux 7 ne peut atteindre le sol sur les premiers centimètres de par l'angle d'émission vertical du faisceau lumineux et de par la hauteur du premier module lumineux 3.

Par « l'angle d'émission vertical », on entend l'angle d'ouverture du faisceau sur un plan vertical. Par opposition, on entend « l'angle d'émission horizontal » l'angle d'ouverture du faisceau sur un plan horizontal.

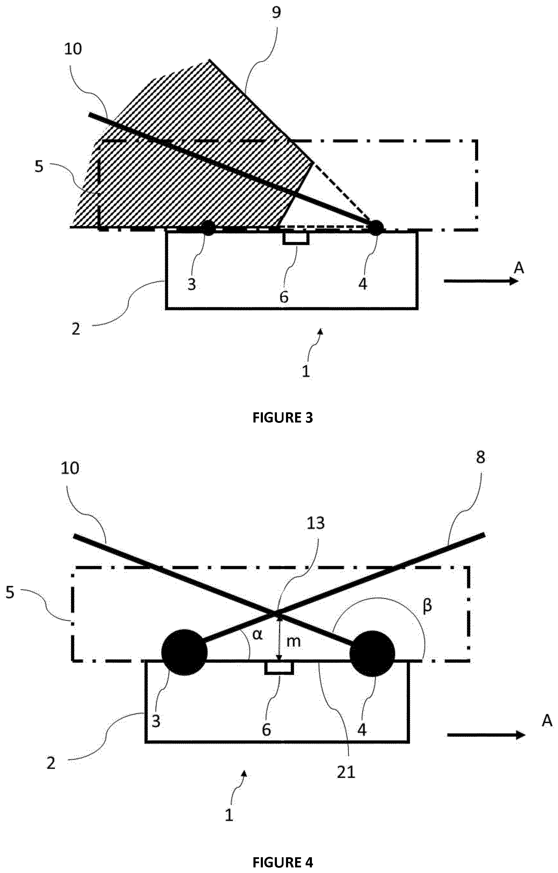

Comme illustré sur la figure 3, le deuxième module lumineux 4 émet un deuxième faisceau lumineux 9 selon un deuxième axe 10 principal d'émission. Ce deuxième faisceau lumineux 9 est sensiblement compris dans un volume conique d'axe le deuxième axe 10 principal d'émission. La surface du sol éclairée par le deuxième module lumineux 4 est représentée par la surface hachurée.

Un faisceau lumineux doit être compris comme un ensemble de rayons lumineux tous issus de la même source ou du même point. L'axe principal d'émission est un axe passant par la source du faisceau lumineux et sur lequel l'intensité lumineuse issus de la source est la plus forte. Comme mentionné précédemment, tous les rayons lumineux du faisceau lumineux sont sensiblement compris dans un volume de forme conique formé autour de l'axe principal d'émission.

Selon le mode de réalisation de l'invention, le premier faisceau lumineux 7 du premier module lumineux 3 arrière est orienté vers l'avant. Le deuxième faisceau lumineux 9 du deuxième module lumineux 4 avant est orienté vers l'arrière. Les deux faisceaux lumineux 7, 9 sont ainsi orientés l'un vers l'autre. Ainsi, les deux faisceaux lumineux 7, 9 se croisent, notamment à proximité du véhicule, c'est-à-dire qu'au moins une partie des rayons lumineux de chaque faisceau se croise, de sorte que les deux faisceaux lumineux 7, 9 se recouvrent en une zone de recouvrement 12 située entre les deux modules lumineux. Dans sa projection horizontale sur le plan de la route, cette zone de recouvrement 12 présente une forme triangulaire, délimitée par un point de croisement 11 qui est le point de ladite zone de recouvrement 12 le plus éloigné du véhicule 2.

Autrement dit, les axes principaux 8, 10 d'émission sont orientés l'un vers l'autre. Ils se croisent de manière à ce que le premier faisceau 7 soit orienté vers le deuxième module 4 et inversement. Le premier axe 8 principal d'émission et le deuxième axe 10 principal d'émission sont donc sécants, dans le mode de réalisation pour lequel les deux modules d'éclairage 3, 4 présentent la même hauteur dans la direction verticale. Si ces deux modules d'éclairage 3, 4 présentent une hauteur différente ou une orientation différente selon la direction verticale, leurs axes principaux 8, 10 d'émission sont à des hauteurs différentes, mais leur projection sur un plan horizontal se croise, comme cela est particulièrement représenté par la figure 4.

Le premier module lumineux 3 et le deuxième module lumineux 4 sont agencés de manière à ce que le point de croisement 11 défini précédemment soit localisé à proximité d'un côté latéral 21. La distance d entre ledit point de croisement 11 et le côté latéral 21 du véhicule 2 est préférentiellement comprise entre 50 cm, et 5 m, très préférentiellement comprise entre 4 m et 5 m. Cette distance correspond avantageusement au moins au côté de la région latérale 5 parallèle au véhicule et le plus éloigné du véhicule, de sorte à couvrir toute cette région latérale 5, comme illustré par la figure 1. Comme illustré sur la figure 4, le premier axe 8 principal d'émission et le deuxième axe 10 principal d'émission (ou leur projection sur un plan horizontal) sont sécants en un point de rencontre 13. La distance m entre ledit point de rencontre 13 et le côté latéral 21 du véhicule 2 est préférentiellement comprise entre 25 cm, et 2 m, très préférentiellement comprise entre 50 cm et 1 m.

Dans un mode de réalisation, le premier axe 8 principal d'émission forme un angle α avec le côté latéral 21 du véhicule 2 compris entre 15° et 35°, préférentiellement entre 20° et 25°.

Dans un mode de réalisation, le deuxième axe 10 principal d'émission forme un angle β avec le côté latéral 21 du véhicule 2 compris entre 165° et 145°, préférentiellement entre 160° et 155°.

Le premier module lumineux 3 et le deuxième module lumineux 4 peuvent être séparés d'une distance supérieure à 15 cm, préférentiellement d'une distance comprise entre 15 cm et 4,5 m. Cette distance entre les deux modules lumineux autorise avantageusement un éclairage optimal de la partie de la région latérale 5 du véhicule 2 comprise entre les deux modules lumineux ainsi que les parties de la région latérale situées vers l'avant et l'arrière du véhicule 2.

Le premier module lumineux 3 et le deuxième module lumineux 4 peuvent être disposés sur la partie basse du véhicule, c'est-à-dire, sur une partie plus proche du sol. La distance entre le sol et le premier module lumineux 3 et/ou le deuxième module lumineux 4 est préférentiellement comprise entre 20 cm et 50 cm.

Cette position basse du sol permet de réduire la distance entre le module lumineux et le premier point du faisceau à atteindre le sol. Il est ainsi possible d'utiliser des modules lumineux dont l'angle d'émission vertical est réduit.

Comme cela ressort de la figure 1, les modules lumineux sont ainsi agencés de manière à ce que leurs faisceaux recouvrent l'intégralité de la région latérale 5. Une telle disposition du premier module lumineux 3 et du deuxième module lumineux 4 permet donc notamment avantageusement d'éclairer la partie de la région latérale 5 du véhicule situé entre les deux modules lumineux. Une telle disposition permet également d'éclairer la périphérie de la partie de la région latérale 5, notamment la partie périphérique orientée vers le côté latéral 21 du véhicule 2. La totalité de la surface de la région latérale 5 du véhicule 2 est ainsi éclairée d'une intensité minimale.

Préférentiellement, les modules lumineux 3, 4 sont disposés de manière à ce que les faisceaux comprennent chacun au moins un rayon lumineux parallèle au côté latéral 21 du véhicule.

Comme illustré sur la figure 1, cette disposition permet avantageusement au premier module lumineux 3 d'éclairer la partie du sol à proximité du deuxième module lumineux 4 à proximité du côté latéral 21 du véhicule. Comme expliqué précédemment, cette partie n'est pas illuminée par le deuxième module lumineux à cause de l'angle d'émission verticale du deuxième faisceau lumineux 9 et de la hauteur du deuxième module lumineux 4.

De même, le deuxième module lumineux 4 éclaire la partie du sol à proximité du premier module lumineux 3 à proximité du côté latéral 21 du véhicule. Un rayon lumineux du premier module lumineux 3 parallèle au côté latéral 21 du véhicule 2 permet d'éclairer la surface du sol sous le deuxième module lumineux 4 et inversement.

L'invention permet ainsi avantageusement l'utilisation de modules lumineux à angle d'émission horizontal réduit tout en éclairant la totalité de la région latérale 5, y compris la portion la plus proche des modules lumineux 3,4.

Dans un mode de réalisation, l'angle d'émission horizontal du premier module lumineux 3 et/ou du deuxième module lumineux 4 est égal à 70° ou compris entre 65° et 75°. Le croisement des modules lumineux permet avantageusement de réduire l'angle d'émission horizontal des modules lumineux.

En remarque, avec des modules lumineux dont les axes principaux d'émission seraient orientés parallèlement, et perpendiculairement au côté latéral 21, les portions du côté latéral du véhicule au plus loin des modules seraient insuffisamment éclairées. Une telle disposition imposerait des modules lumineux dont l'angle d'émission horizontal serait au moins égal à 180°, plus couteux et plus difficiles à produire.

En remarque également, avec deux modules lumineux disposés côte à côte et non croisés, l'angle d'émission horizontal des modules lumineux devrait être au moins égal à 90°.

Les modules lumineux 3, 4 peuvent être disposés dans un renfoncement de la caisse de véhicule. En effet, l'invention permettant avantageusement d'éclairer la surface proche d'un module lumineux par l'autre module, il est possible de reculer le module lumineux pour le protéger des chocs sans que l'éclairage de la portion de la région latérale 5 la plus proche du côté latéral 21 du véhicule ne soit impacté.

L'invention concerne également un système d'assistance comprenant un système d'éclairage selon le mode de réalisation de l'invention. Ce système d'assistance comprend de plus au moins un dispositif de prise d'image 6 tel un appareil photo ou une caméra. Le dispositif de prise d'image 6 est agencé de manière à prendre une image ou une vidéo de la région latérale 5 du véhicule 2 éclairée par le système d'éclairage 1. Il permet notamment de capter des images du sol à proximité du véhicule automobile, comme des informations sur les obstacles et les marquages sur la route, de jour comme de nuit.

Le système d'assistance à la conduite comprend aussi une unité centrale, qui peut correspondre à tout moyen matériel (hardware) et/ou logiciel (software) d'une unité de gestion intelligente, comprenant au moins un calculateur, par exemple un ou plusieurs microprocesseurs, pour mettre en œuvre un procédé d'assistance à la conduite. Cette unité centrale peut être disposée en tout emplacement du véhicule automobile, peut par exemple être intégrée dans l'ordinateur de bord du véhicule automobile. En variante, elle peut être déportée au sein d'un dispositif de prise d'image 6. Le système d'assistance à la conduite comprend ainsi un dispositif de détection de marquage et/ou tout élément au sol, formé par la combinaison d'au moins un dispositif de prise d'image et d'une unité de traitement d'image.

Le système d'assistance comprend de plus des moyens de communications reliant la (ou les) caméra à l'unité centrale, de sorte à recevoir les images de la caméra. L'unité centrale comprend un logiciel de traitement d'image pour en déduire les informations nécessaires à l'assistance à la conduite. Ainsi, le système d'assistance comprend plus généralement un dispositif de détection de marquage au sol et/ou obstacle et/ou tout élément dans une zone latérale du véhicule. Le système d'assistance comprend de plus des moyens de communications reliant l'unité centrale aux modules lumineux et à l'au moins un dispositif de prise d'image 6, pour les commander, les activer et/ou les désactiver.

L'invention concerne également un véhicule 2, notamment un véhicule automobile comprenant un tel système d'éclairage 1 et un tel système d'assistance. Pour cela, le véhicule 2 comprend au moins un premier module lumineux 3 et un deuxième module lumineux 4, comme décrit précédemment. Ces modules lumineux sont préférentiellement agencés sur ou à proximité d'un côté latérale 21 du véhicule.

L'invention concerne aussi un procédé d'éclairage d'une région latérale 5 d'un véhicule 2.

Un mode d'exécution du procédé d'éclairage d'une région latérale 5 d'un véhicule 2 est décrit ci-après.

Le procédé comprend une première étape d'émission d'un premier faisceau lumineux 7 par un premier module lumineux 3 disposé sur une partie arrière dudit véhicule 2 selon un premier axe principal d'émission 8.

Le procédé comprend une deuxième étape d'émission d'un deuxième faisceau lumineux 9 par un deuxième module lumineux 4 disposé sur une partie avant dudit véhicule 2 selon un deuxième axe principal.

Les deux faisceaux lumineux 7, 9 sont orientés l'un vers l'autre, comme détaillé précédemment.

La première étape et la deuxième étape sont préférentiellement exécutées simultanément.

En complément, le système d'assistance met en œuvre un procédé d'assistance à la conduite, qui comprend une première étape consistant à émettre un éclairage particulier, par le ou les faisceaux lumineux décrits précédemment, selon le procédé d'éclairage décrit. Le procédé d'assistance comprend également une étape de capture d'une image d'une région latérale 5 d'un véhicule 2.

L'étape de capture d'une image est exécutée pendant l'émission du premier faisceau lumineux 7 et/ou du deuxième faisceau lumineux 9.

Ce procédé permet avantageusement la production d'une image de la zone latérale 5 du véhicule 2 dont l'entière surface est éclairée d'une intensité suffisante pour la détection d'un marquage ou d'un obstacle ou d'un changement de structure de la voie.

## Revendications

1. Système d'éclairage (1) d'une région latérale (5) d'un véhicule (2), comprenant un premier module lumineux (3) arrière apte à émettre un premier faisceau lumineux (7) et un deuxième module lumineux (4) avant apte à émettre un deuxième faisceau lumineux (9), le premier et le deuxième module lumineux (3, 4) étant agencés de sorte que leurs faisceaux lumineux (7, 9) respectifs sont orientés l'un vers l'autre les deux modules lumineux (3, 4) étant disposées de manière à ce que leurs faisceaux lumineux (7, 9) sont aptes à se croiser en une zone de recouvrement (12), délimitée par un point de croisement (11) localisé à une distance (d) du véhicule (2) comprise entre 50 cm et 5 m, le premier et le deuxième module lumineux (3, 4) étant disposés de manière à ce que les faisceaux (7, 9) respectifs comprennent chacun au moins un rayon lumineux parallèle au côté latéral (21) du véhicule (2), **caractérisé en ce que** dans la projection horizontale sur le plan de la route (30), la zone de recouvrement (12) présente une forme triangulaire, délimitée par le point de croisement (11) en tant que point de ladite zone de recouvrement (12) le plus éloigné du véhicule (2).

2. Système d'éclairage (1) selon la revendication 1, **caractérisé en ce que** le premier faisceau lumineux (7) est orienté selon un premier axe (8) principal d'émission, **en ce que** le deuxième faisceau lumineux (9) est orienté selon un deuxième axe (10) principal d'émission, et **en ce que** les projections sur un plan horizontal du premier axe (8) principal d'émission et du deuxième axe (10) principal d'émission sont sécants.

3. Système d'éclairage (1) selon l'une des revendications précédentes, **caractérisé en ce que** le premier module lumineux (3) et le deuxième module lumineux (4) sont disposés l'un de l'autre à une distance supérieure à 15 cm.

4. Système d'éclairage (1) selon l'une quelconque des revendications précédentes, **caractérisé en ce que** le premier module lumineux (3) et/ou le deuxième module lumineux (4) comprend au moins une source de lumière infrarouge, préférentiellement proche infrarouge.

5. Système d'assistance à la conduite d'un véhicule **caractérisé en ce qu'**il comprend un système d'éclairage (1) selon l'une des revendications précédentes et au moins un dispositif de prise d'image (6) comme un appareil photo ou une caméra.

6. Véhicule (2), notamment véhicule automobile, **caractérisé en ce qu'**il comprend un système d'éclairage (1) selon l'une des revendications 1 à 4 ou un système d'assistance à la conduite d'un véhicule selon la revendication précédente.

7. Véhicule (2) selon la revendication précédente dans lequel le premier module lumineux (3) est disposé sur une partie arrière du véhicule (2) et le deuxième module lumineux (4) est disposé sur une partie avant du véhicule (2), et dans lequel le premier axe (8) principal d'émission est orienté vers la partie avant du véhicule (2) et le deuxième axe (10) principal d'émission est orienté vers la partie arrière du véhicule (2).

8. Véhicule selon l'une des revendications 6 ou 7, **caractérisé en ce que** le premier module lumineux (3) et/ou le deuxième module lumineux (4) est disposé sur une partie basse du véhicule, préférentiellement à une distance du sol comprise entre 20 cm et 50 cm.

9. Véhicule (2) selon l'une des revendications 6 à 8 comprenant en outre, un dispositif de prise d'image (6) agencé de manière à prendre une image d'une région latérale (5) du véhicule (2).

10. Procédé d'éclairage d'une région latérale (5) d'un véhicule (2), comprenant les étapes suivantes :
- émission d'un premier faisceau lumineux (7) par un premier module lumineux (3) arrière ;
- émission d'un deuxième faisceau lumineux (9) par un deuxième module lumineux (4) avant,
les deux faisceaux lumineux (7, 9) étant orientés l'un vers l'autre, les deux modules lumineux (3, 4) étant disposées de manière à ce que leurs faisceaux lumineux (7, 9) sont aptes à se croiser en une zone de recouvrement (12), délimitée par un point de croisement (11) localisé à une distance (d) du véhicule (2) comprise entre 50 cm et 5 m, le premier et le deuxième module lumineux (3, 4) étant disposés de manière à ce que les faisceaux (7, 9) respectifs comprennent chacun au moins un rayon lumineux parallèle au côté latéral (21) du véhicule (2), **caractérisé en ce que** dans la projection horizontale sur le plan de la route (30), la zone de recouvrement (12) présente une forme triangulaire, délimitée par le point de croisement (11) en tant que point de ladite zone de recouvrement (12) le plus éloigné du véhicule (2).

11. Procédé d'assistance à la conduite d'un véhicule, **caractérisé en ce qu'**il comprend la mise en œuvre d'un procédé d'éclairage selon la revendication précédente, et une étape de capture d'une image d'une région latérale (5) d'un véhicule (2) éclairée par au moins l'un des deux faisceaux lumineux (7, 9).

## Patentansprüche

1. Beleuchtungssystem (1) eines seitlichen Bereichs (5) eines Fahrzeugs (2), umfassend ein erstes hinteres Lichtmodul (3), das geeignet ist, einen ersten Lichtstrahl (7) auszusenden, und ein zweites vorderes Lichtmodul (4), das geeignet ist, einen zweiten Lichtstrahl (9) auszusenden, wobei das erste und das zweite Lichtmodul (3, 4) so angeordnet sind, dass ihre jeweiligen Lichtstrahlen (7, 9) aufeinander ausgerichtet sind, wobei die beiden Lichtmodule (3, 4) so angeordnet sind, dass ihre Lichtstrahlen (7, 9) geeignet sind, sich in einem Überlappungsbereich (12) zu kreuzen, der durch einen Kreuzungspunkt (11) begrenzt ist, der sich in einem Abstand (d) vom Fahrzeug (2) zwischen 50 cm und 5 m befindet, wobei das erste und das zweite Lichtmodul (3, 4) so angeordnet sind, dass die jeweiligen Strahlen (7, 9) jeweils mindestens einen Lichtstrahl umfassen, der parallel zur Seitenfläche (21) des Fahrzeugs (2) verläuft, **dadurch gekennzeichnet, dass** in der horizontalen Projektion auf die Fahrbahnebene (30) der Überlappungsbereich (12) eine dreieckige Form aufweist, die durch den Kreuzungspunkt (11) als den vom Fahrzeug (2) am weitesten entfernten Punkt des Überlappungsbereichs (12) begrenzt ist.

2. Beleuchtungssystem (1) nach Anspruch 1, **dadurch gekennzeichnet, dass** der erste Lichtstrahl (7) entlang einer ersten Hauptemissionsachse (8) ausgerichtet ist, dass der zweite Lichtstrahl (9) entlang einer zweiten Hauptemissionsachse (10) ausgerichtet ist und dass die Projektionen der ersten Hauptemissionsachse (8) und der zweiten Hauptemissionsachse (10) auf eine horizontale Ebene sich schneiden.

3. Beleuchtungssystem (1) nach einem der vorhergehenden Ansprüche, **dadurch gekennzeichnet, dass** das erste Lichtmodul (3) und das zweite Lichtmodul (4) in einem Abstand von mehr als 15 cm voneinander angeordnet sind.

4. Beleuchtungssystem (1) nach einem der vorhergehenden Ansprüche, **dadurch gekennzeichnet, dass** das erste Lichtmodul (3) und/oder das zweite Lichtmodul (4) mindestens eine Infrarotlichtquelle umfasst, vorzugsweise nahes Infrarot.

5. Fahrerassistenzsystem eines Fahrzeugs, **dadurch gekennzeichnet, dass** es ein Beleuchtungssystem (1) nach einem der vorhergehenden Ansprüche und mindestens eine Bildaufnahmevorrichtung (6) wie einen Fotoapparat oder eine Kamera umfasst.

6. Fahrzeug (2), insbesondere Kraftfahrzeug, **dadurch gekennzeichnet, dass** es ein Beleuchtungssystem (1) nach einem der Ansprüche 1 bis 4 oder ein Fahrerassistenzsystem eines Fahrzeugs nach dem vorhergehenden Anspruch umfasst.

7. Fahrzeug (2) nach dem vorhergehenden Anspruch, bei dem das erste Lichtmodul (3) an einem hinteren Teil des Fahrzeugs (2) angeordnet ist und das zweite Lichtmodul (4) an einem vorderen Teil des Fahrzeugs (2) angeordnet ist, und bei dem die erste Hauptemissionsachse (8) zum vorderen Teil des Fahrzeugs (2) und die zweite Hauptemissionsachse (10) zum hinteren Teil des Fahrzeugs (2) ausgerichtet ist.

8. Fahrzeug nach einem der Ansprüche 6 oder 7, **dadurch gekennzeichnet, dass** das erste Lichtmodul (3) und/oder das zweite Lichtmodul (4) an einem unteren Teil des Fahrzeugs angeordnet ist, vorzugsweise in einem Abstand vom Boden zwischen 20 cm und 50 cm.

9. Fahrzeug (2) nach einem der Ansprüche 6 bis 8, das ferner eine Bildaufnahmevorrichtung (6) umfasst, die so angeordnet ist, dass sie ein Bild eines seitlichen Bereichs (5) des Fahrzeugs (2) aufnimmt.

10. Verfahren zur Beleuchtung eines seitlichen Bereichs (5) eines Fahrzeugs (2), umfassend die folgenden Schritte:
- Aussenden eines ersten Lichtstrahls (7) durch ein erstes hinteres Lichtmodul (3);
- Aussenden eines zweiten Lichtstrahls (9) durch ein zweites vorderes Lichtmodul (4), wobei
die beiden Lichtstrahlen (7, 9) aufeinander ausgerichtet sind, wobei die beiden Lichtmodule (3, 4) so angeordnet sind, dass ihre Lichtstrahlen (7, 9) geeignet sind, sich in einem Überlappungsbereich (12) zu kreuzen, der durch einen Kreuzungspunkt (11) begrenzt ist, der sich in einem Abstand (d) vom Fahrzeug (2) zwischen 50 cm und 5 m befindet, wobei das erste und das zweite Lichtmodul (3, 4) so angeordnet sind, dass die jeweiligen Strahlen (7, 9) jeweils mindestens einen Lichtstrahl umfassen, der parallel zur Seitenfläche (21) des Fahrzeugs (2) verläuft, **dadurch gekennzeichnet, dass** in der horizontalen Projektion auf die Fahrbahnebene (30) der Überlappungsbereich (12) eine dreieckige Form aufweist, die durch den Kreuzungspunkt (11) als den vom Fahrzeug (2) am weitesten entfernten Punkt des Überlappungsbereichs (12) begrenzt ist.

11. Verfahren zur Fahrerassistenz eines Fahrzeugs, **dadurch gekennzeichnet, dass** es die Durchführung eines Beleuchtungsverfahrens nach dem vorhergehenden Anspruch und einen Schritt des Erfassens eines Bildes eines seitlichen Bereichs (5) eines Fahrzeugs (2) umfasst, der durch mindestens einen der beiden Lichtstrahlen (7, 9) beleuchtet wird.

## Claims

1. Lighting system (1) of a lateral region (5) of a vehicle (2), comprising a first rear light module (3) capable of emitting a first light beam (7) and a second front light module (4) capable of emitting a second light beam (9), the first and second light modules (3, 4) being arranged so that their respective light beams (7, 9) are oriented toward each other, the two light modules (3, 4) being arranged so that their light beams (7, 9) are capable of crossing in an overlap zone (12), delimited by a crossing point (11) located at a distance (d) from the vehicle (2) between 50 cm and 5 m, the first and second light modules (3, 4) being arranged so that the respective beams (7, 9) each comprise at least one light ray parallel to the lateral side (21) of the vehicle (2), **characterized in that** in the horizontal projection on the road plane (30), the overlap zone (12) has a triangular shape, delimited by the crossing point (11) as the point of said overlap zone (12) furthest from the vehicle (2).

2. Lighting system (1) according to claim 1, **characterized in that** the first light beam (7) is oriented along a first main emission axis (8), **in that** the second light beam (9) is oriented along a second main emission axis (10), and **in that** the projections on a horizontal plane of the first main emission axis (8) and the second main emission axis (10) are intersecting.

3. Lighting system (1) according to one of the preceding claims, **characterized in that** the first light module (3) and the second light module (4) are disposed at a distance from each other greater than 15 cm.

4. Lighting system (1) according to any one of the preceding claims, **characterized in that** the first light module (3) and/or the second light module (4) comprises at least one infrared light source, preferentially near infrared.

5. Driving assistance system of a vehicle **characterized in that** it comprises a lighting system (1) according to one of the preceding claims and at least one image capturing device (6) such as a photo camera or a video camera.

6. Vehicle (2), particularly a motor vehicle, **characterized in that** it comprises a lighting system (1) according to one of claims 1 to 4 or a driving assistance system of a vehicle according to the preceding claim.

7. Vehicle (2) according to the preceding claim in which the first light module (3) is arranged on a rear part of the vehicle (2) and the second light module (4) is arranged on a front part of the vehicle (2), and in which the first main emission axis (8) is oriented toward the front part of the vehicle (2) and the second main emission axis (10) is oriented toward the rear part of the vehicle (2).

8. Vehicle according to one of claims 6 or 7, **characterized in that** the first light module (3) and/or the second light module (4) is arranged on a lower part of the vehicle, preferentially at a distance from the ground between 20 cm and 50 cm.

9. Vehicle (2) according to one of claims 6 to 8 further comprising an image capturing device (6) arranged to take an image of a lateral region (5) of the vehicle (2).

10. Method for lighting a lateral region (5) of a vehicle (2), comprising the following steps:
- emission of a first light beam (7) by a first rear light module (3);
- emission of a second light beam (9) by a second front light module (4), the two light beams (7, 9) being oriented toward each other, the two light modules (3, 4) being arranged so that their light beams (7, 9) are capable of crossing in an overlap zone (12), delimited by a crossing point (11) located at a distance (d) from the vehicle (2) between 50 cm and 5 m, the first and second light modules (3, 4) being arranged so that the respective beams (7, 9) each comprise at least one light ray parallel to the lateral side (21) of the vehicle (2), **characterized in that** in the horizontal projection on the road plane (30), the overlap zone (12) has a triangular shape, delimited by the crossing point (11) as the point of said overlap zone (12) furthest from the vehicle (2).

11. Method for driving assistance of a vehicle, **characterized in that** it comprises implementing a lighting method according to the preceding claim, and a step of capturing an image of a lateral region (5) of a vehicle (2) illuminated by at least one of the two light beams (7, 9).
